(19) Europäisches Patentamt
European Patent Office
Office européen des brevets

(11) **EP 3 007 325 A1**

(12) **EUROPEAN PATENT APPLICATION**

(43) Date of publication:
**13.04.2016 Bulletin 2016/15**

(51) Int Cl.:
*H02K 3/02* (2006.01)  *H02K 3/34* (2006.01)

(21) Application number: **15188335.2**

(22) Date of filing: **05.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.10.2014 US 201414507928**

(71) Applicant: **Hamilton Sundstrand Corporation Charlotte, NC 28217 (US)**

(72) Inventors:
• PATEL, Dhaval
  **Loves Park, IL Illinois 61111 (US)**
• FRISKE, Gordon W.
  **Rockford, IL Illinois 61107 (US)**
• COLON VELAZQUEZ, Wilfredo E.
  **South Beloit, IL Illinois 61080 (US)**

(74) Representative: **Leckey, David Herbert Dehns St Bride's House 10 Salisbury Square London EC4Y 8JD (GB)**

(54) **HYBRID CONDUCTOR FOR GENERATOR STATOR WINDING**

(57)    A generator (23) comprises a rotor (22) to be driven for rotation adjacent a stator (24). The stator (24) includes laminated core teeth (28) having circumferentially intermediate slots (30) and a conductor (31) received within the slots (30). The conductor (31) has an outer copper layer (44) and an inner aluminum core (46).

**FIG.2**

## Description

## BACKGROUND OF THE INVENTION

This application relates to a generator stator wherein the conductors are provided by hybrid wires.

Generators are known and are driven by a source of rotation to, in turn, generate electricity. In general, the source of rotation, such as a gas turbine engine, drives a rotor. The rotor carries magnets and a stator is positioned to have conductors positioned adjacent to the rotating magnets. The rotation of the magnets relative to the conductors generates an electric current which may then be utilized. In some applications, the rotor consists of windings wound on discrete poles which are energized to create an electromagnet in place of magnets.

Historically, the conductors have been formed of a single material. Copper is often utilized.

So-called "hybrid" materials are utilized for electrical power transmission. One known hybrid material may have an outer copper layer and an internal aluminum core.

These materials take advantage of what is known as the "skin effect." The skin effect relies on the recognition that the current density is greatest at the outer periphery of a component carrying AC current.

Thus, the better conducting material, for example copper, is positioned at the outer periphery while a less conductive material, for example aluminum, is positioned internally of the copper layer. Since aluminum weighs less than copper, this reduces the weight of the transmission component.

These materials have been utilized in bus bar applications.

## SUMMARY OF THE INVENTION

A generator comprises a rotor to be driven for rotation adjacent a stator. The stator includes a laminated core having circumferentially intermediate slots and a conductor received within the slots. The conductor has an outer copper layer and an inner aluminum core.

A stator is also disclosed.

These and other features may be best understood from the following drawings and specification.

## BRIEF DESCRIPTION OF THE DRAWINGS

Figure 1 schematically shows a generator.
Figure 2 shows a portion of a generator stator.
Figure 3 shows a detail of a conductor in the generator stator.

## DETAILED DESCRIPTION

A gas turbine engine 20 is shown schematically driving a generator rotor 22. A generator 23 includes a stator 24 positioned outwardly of the rotor 22. As is known, as the rotor 22 is driven to rotate relative to the stator 24, electric current is generated. This electric current may be conveyed to an electric use 26. One application for such systems is on aircraft.

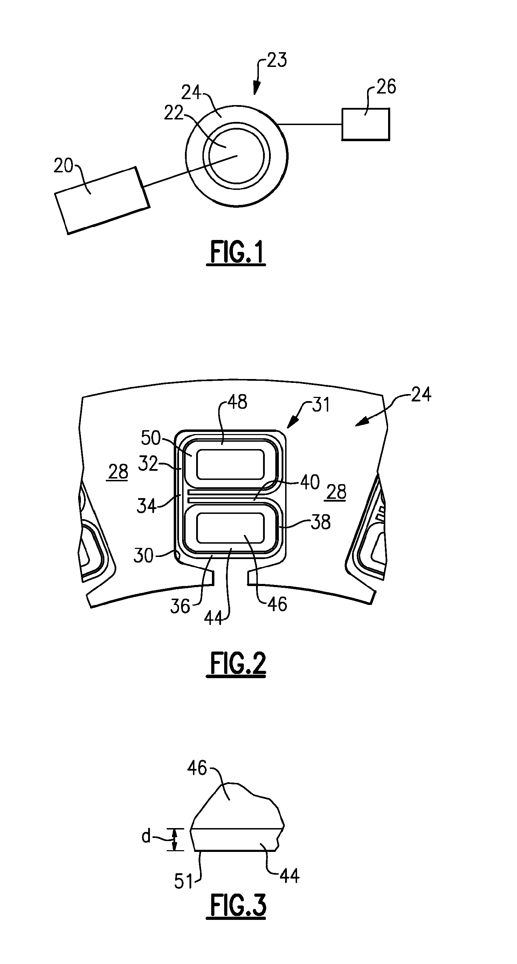

Figure 2 shows a detail of the stator 24. A laminated core 28 have intermediate slots 30. Conductors 31 are positioned within the slots 30. Slot insulators 32 include an outer wall 34 leading to legs 36, internal bend 38, and an inwardly extending leg 40.

The conductors 31 are received inwardly of the insulator 32. The conductor 31, as disclosed, includes an outer copper layer 44 and an inner aluminum core 46.

One known material, which may be utilized as the conductor 31, is available from Bruker EST, Hydrostatic Extrusions Limited of Perth, Scotland, United Kingdom.

The conductors 31 have a shape such that they are generally oval with long sides 48 connected by shorter sides 50.

The use of the aluminum core 46 within the copper layer 44 reduces weight. However, as an unexpected result of utilizing such materials in a generator, eddy current losses, which typically occur in a generator, are reduced. By utilizing the copper only at the outer surfaces, such eddy current losses are reduced.

Generators operating in a range of 300-800 Hz will particularly benefit from this disclosure.

As shown in Figure 3, a thickness d of the copper layer 44, until the beginning of the aluminum core 46, may be defined. The distance d may be selected with reference to the "skin depth," as defined as part of the skin effect mentioned above. The skin depth is the depth below an outer surface of a conductor at which a current density has fallen to about 0.37 of the current density at the outer surface 51. The skin depth is defined by the following formula:

$$\delta = \sqrt{\frac{2\rho}{\omega \mu_r \mu_0}}$$

where

| | |
|---|---|
| $p =$ | resistivity of the conductor |
| $\omega =$ | angular frequency of current = $2\pi \ x$ frequency |
| $\mu_r =$ | relative magnetic permeability of the conductor |
| $\mu_0 =$ | the permeability of free space |

A designer, knowing the operational frequency of the generator, and the other variables mentioned above, would be able to properly size the thickness d.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A generator (23) comprising:

    a rotor (22) to be driven for rotation adjacent a stator (24); and
    said stator (24) including a laminated core (28) having circumferentially intermediate slots (30), and a conductor (31) received within said slots (30), said conductor (31) having an outer copper layer (44) and an inner aluminum core (46).

2. The generator as set forth in claim 1, wherein said conductor (31) has a generally oval shape with longer sides (48) and shorter sides (50).

3. The generator as set forth in claim 1 or 2, wherein there are a pair of conductors (31) in each of said slots (30).

4. The generator as set forth in claim 3, wherein slot insulators (32) surround said conductors (31) within said slots (30).

5. The generator as set forth in any preceding claim, wherein said outer copper layer (44) extends inwardly for a skin depth ($\delta$) which is determined, at least in part, based upon a calculation of the skin depth ($\delta$).

6. The generator as set forth in claim 5, wherein the skin depth ($\delta$) is defined by the following formula.

$$\delta = \sqrt{\frac{2\rho}{\omega\mu_r\mu_0}}$$

where

    $p$ = resistivity of the conductor
    $\omega$ = angular frequency of current = $2\pi$ $x$ frequency
    $\mu_r$ = relative magnetic permeability of the conductor
    $\mu_0$ = the permeability of free space

7. The generator as set forth in claim 6, wherein the frequency of the generator is 300-800 hz.

8. A stator (24) for a generator, said stator (24) including a laminated core (28) having circumferentially intermediate slots (30), and a conductor (31) received within said slots (30), said conductor (31) having an outer copper layer (44) and an inner aluminum core (46).

9. The stator as set forth in claim 8, wherein said conductor (31) has a generally oval shape with longer sides (48) and shorter sides (50).

10. The stator as set forth in claim 8 or 9, wherein there are a pair of conductors (31) in each of said slots (30).

11. The stator as set forth in claim 10, wherein slot insulators (32) surround said conductors (31) within said slots (30).

12. The stator as set forth in any of claims 8 to 11, wherein said outer copper layer (44) extends inwardly for a skin depth ($\delta$) which is determined, at least in part, based upon a calculation of the skin depth ($\delta$).

13. The stator as set forth in claim 12, wherein the skin depth ($\delta$) is defined by the following formula.

$$\delta = \sqrt{\frac{2\rho}{\omega\mu_r\mu_0}}$$

where

    $p$ = resistivity of the conductor
    $\omega$ = angular frequency of current = $2\pi$ $x$ frequency
    $\mu_r$ = relative magnetic permeability of the conductor
    $\mu_0$ = the permeability of free space

**FIG.1**

**FIG.2**

**FIG.3**

Europäisches
Patentamt

European
Patent Office

Office européen
des brevets

# EUROPEAN SEARCH REPORT

Application Number

EP 15 18 8335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 201 118 302 Y (SHELL ELECTRIC MFG HOLDINGS CO [HK]) 17 September 2008 (2008-09-17) | 8 | INV. H02K3/02 H02K3/34 |
| Y | * abstract; figures 1-3 * | 1-7,9-13 | |
| Y | US 2014/117805 A1 (HAGIWARA SHUYA [JP] ET AL) 1 May 2014 (2014-05-01) * paragraph [0048]; figures 11,12 * * abstract; figure 12 * | 1-4,9-11 | |
| Y | US 2003/214196 A1 (CAI WEI [US] ET AL) 20 November 2003 (2003-11-20) * paragraph [0012] - paragraph [0014]; figure 1a * | 1,5-7, 12,13 | |

TECHNICAL FIELDS
SEARCHED     (IPC)

H02K

The present search report has been drawn up for all claims

| Place of search | Date of completion of the search | Examiner |
|---|---|---|
| The Hague | 16 February 2016 | Zavelcuta, Florin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
........................................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 15 18 8335

This annex lists the patent family members relating to the patent documents cited in  the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | | Publication date |
|---|---|---|---|---|---|
| CN 201118302 | Y | 17-09-2008 | NONE | | |
| US 2014117805 | A1 | 01-05-2014 | CN | 103609000 A | 26-02-2014 |
| | | | DE | 112012002571 T5 | 20-03-2014 |
| | | | JP | 5839851 B2 | 06-01-2016 |
| | | | JP | 2013009493 A | 10-01-2013 |
| | | | US | 2014117805 A1 | 01-05-2014 |
| | | | WO | 2012176705 A1 | 27-12-2012 |
| US 2003214196 | A1 | 20-11-2003 | DE | 10321956 A1 | 04-03-2004 |
| | | | US | 2003214196 A1 | 20-11-2003 |
| | | | US | 2005206263 A1 | 22-09-2005 |

EPO FORM P0459

For more details about this annex : see Official Journal of the European Patent Office, No. 12/82